# EUROPÄISCHE PATENTSCHRIFT

(11) **EP 0 784 369 B1**
(45) Veröffentlichungstag und Bekanntmachung des Hinweises auf die Patenterteilung: **15.03.2000**
(21) Anmeldenummer: 97810013.9
(22) Anmeldetag: 13.01.1997
(51) Int. Cl.: H02K 9/06, F04D 25/08, A47L 9/22

(54) **Elektromotorisch angetriebenes Bypass-Gebläse**
Electric motor driven bypass fan
Ventilateur à bypass entraîné par moteur électrique

(30) Priorität: 11.01.1996 CH 7896
(43) Veröffentlichungstag der Anmeldung: 16.07.1997
(73) Patentinhaber: SA-Patent AG, 7002 Chur (CH)
(72) Erfinder: Anderlini, Michelangelo, c/o SA-Patent AG, 7002 Chur (CH)
(74) Vertreter: Riederer, Conrad A., Dr.

(56) Entgegenhaltungen:
- EP-A- 0 413 113
- CH-A- 178 334
- GB-A- 2 154 073
- US-A- 3 878 809
- US-A- 4 669 952
- US-A- 5 454 690
- PATENT ABSTRACTS OF JAPAN vol. 007, no. 222 (E-201), 4.Oktober 1983 & JP 58 112433 A (HITACHI KOKI KK), 4.Juli 1983,
- PATENT ABSTRACTS OF JAPAN vol. 017, no. 620 (E-1460), 16.November 1993 & JP 05 191950 A (MATSUSHITA ELECTRIC IND CO LTD), 30.Juli 1993,
- PATENT ABSTRACTS OF JAPAN vol. 013, no. 437 (E-826), 29.September 1989 & JP 01 164245 A (SANYO ELECTRIC CO LTD), 28.Juni 1989,

## Beschreibung

Die vorliegende Erfindung betrifft ein elektromotorisch angetriebenes Bypass-Gebläse mit
- einem Kompressorrad,
- einem aus zwei oder mehr Teilen bestehenden Kompressorgehäuse,
- einem Elektromotor mit Stator, Rotor, Welle und einem Lüfterrad,
- wobei der antriebseitige Kompressorgehäuseteil praktisch luftdicht an den Stator angeschlossen ist und Luftaustrittöffnungen aufweist.

Es ist allgemein bekannt, dass die bei Elektromotoren auftretende Verlustwärme mittels eines Kühlmediums abzuführen ist, um eine Überhitzung des Motors während des Betriebs zu verhindern. Generell wird bezüglich der Belüftung eines Elektromotors zwischen geschlossenem und offenem Innenluftstrom unterschieden. Weiter können die Motoren in eigen- und fremdbelüftete Motoren eingeteilt werden.

Für Staubsauger und Pumpen ist es zweckmässig ein Bypass-Gebläse einzusetzen. In Bypass-Gebläsen ist die Kompressorluft und die Kühlluft des Motors streng getrennt. Um dies zu erreichen wird die Kühlluft durch den Motor hindurch von der kompressorfernen zur kompressornahen Seite des Motors gesogen und dann aus dem Motorraum getrieben. Die Kompressorluft hingegen wird in entgegengesetzter Richtung auf der motorfernen Seite des Kompressorgehäuses angesogen und radial oder tangential aus dem Gehäuse ausgeblasen.

Aus der JP-A-05191950 ist ein Bypass-Gebläse bekannt mit einem antriebseitigen Kompressorgehäuseteil als Lagerschild und einem Lüfterrad zwischen Lagerschild und Motor. Das Lagerschild weist eine in etwa kegelstumpfförmige Vertiefung auf, welche das Lüfterrad und einen Teil des Elektromotors aufnimmt. Die Wand der kegelstumpfförmigen Vertiefung weist Öffnungen auf, durch die die Kühlluft aus dem Motorraum in einen ringförmigen Raum im Kompressorgehäuse ausgestossen wird, den sie wiederum durch weitere Öffnungen in der Wandung ins Freie verlässt. Um die Kühlluft von der Kompressorluft zu trennen, benötigt dieses Gebläse ein zweites Schild. Das zweite und das erste schild bilden zusammen den ringförmigen Raum. Das zweite Schild bildet auf der dem Kompressorrad zugewandten Seite eine Leitfläche für die Kompressorluft. Das Lagerschild stösst an den Stator an und ist mit Befestigungsmitteln mit einem Support für das vom Kompressor abgewandte Lager des Motors verbunden. Nachteilig ist an diesem Bypass-Gebläse, dass das Lüfterrad nicht in einem Lüftergehäuse geführt ist. Es kann deshalb weniger effizient arbeiten. Nachteilig ist zudem, dass die Kühlluft nicht direkt ins Freie geleitet wird, sondern zuerst durch einen grossen, viel Platz einnehmenden Raum getrieben werden muss und dass das Lager schlecht gekühlt ist. Nachteilig ist auch, dass für die Führung der Kompressorluft im Kompressorgehäuse ein weiteres Teil notwendig ist. Auch dass das Lagerschild aus einem Metallblech gestanzt und gepresst ist, wodurch der Kompressor elektrisch nicht vom Motor isoliert ist, ist ein Nachteil.

US-A-4 669 952 beschreibt ein Bypass-Gebläse mit einem antriebseitigen Kompressorgehäuseteil, welches als Lagerschild ausgebildet ist, und einem Lüfterrad zwischen Lagerschild und Elektromotor. Das Lagerschild weist Ohren auf, welche vom Lagerschild abstehen und mit einem den Stator umfassenden reif- oder rohrstumpfartigen Motorgehäuseteil eine Verbindung eingehen. Die Kühlluft tritt durch nicht näher beschriebene Öffnungen zwischen diesem Gehäuseteil und dem Lagerschild aus. Die Kompressorluft wird auf der dem Motor zugewandten Innenseite des Kompressorgehäuses durch eine Ablenkplatte einer Lärm reduzierenden, ringförmigen Vertiefung im Lagerschild zugeführt. Nachteilig an diesem Bypass-Gebläse ist, dass ein den Stator umfassendes Gehäuseteil benötigt wird und das Lüfterrad nicht in einem Lüftergehäuse geführt ist. Zudem wird für die Führung der Kompressorluft neben dem Lagerschild eine Ablenkplatte benötigt.

EP-A-0413 113 beschreibt ebenfalls ein Bypass-Gebläse mit antriebseitigem Lagerschild und Lüfterrad zwischen Lagerschild und Motor. Das Lagerschild ist am Motorgehäuse befestigt. Das Lüfterrad treibt die Kühlluft radial dem Lagerschild entlang und durch Luftaustrittöffnungen im Motorgehäuse ins Freie. Die andere Seite des Lagerschildes ist durch Strömungen der Kompressorluft gekühlt. Die Figur 1 der EP-A-0413 113 zeigt jedoch eine Abdeckung des Lagerschildes, die einen Raum zwischen Lagerschild und Kompressorraum abschliesst und als Führungsschild für die Kompressorluft dient. Nachteilig wirkt sich bei diesem Bypass-Gebläse aus, dass der Motor ein Gehäuse benötigt und zwischen Lagerschild und Kompressorraum ein ungenutzter Hohlraum ist, der durch ein die Produktion verteuerndes Teil abgedeckt werden muss.

Es ist daher Aufgabe der vorliegenden Erfindung, einen Elektromotor zur Verfügung zu stellen, bei welchem die eingangs beschriebenen Nachteile weitgehend vermieden sind. Der Motor sollte insbesondere eine im Vergleich zu den bekannten Motoren bessere Kühlleistung aufweisen. Darüber hinaus sollte der Motor kostengünstiger hergestellt werden können.

Erfindungsgemäss wird dies bei einem Elektromotor der eingangs beschriebenen Art dadurch realisiert, dass
- am antriebseitigen Kompressorgehäuseteil ein Anschlussstutzen zum praktisch luftdichten Anschluss an den Stator und
- ein zweiter Stutzen als Gehäuse für das Lüfterrad ausgebildet ist, und dass
- luftführende Mittel vom Lüftergehäuse her durch die Wandung des Anschlussstutzens hindurch ins Freie führen.

Die Erfindung betrifft auch eine Pumpe mit den erwähnten Merkmalen. Der antriebsnahe Gehäuseteil kann dabei Teil des Pumpengehäuses sein.

Durch die oben aufgeführten Merkmale wird eine bessere Kühlleistung erreicht als wenn die Kühlluft wie in Fig. 1 der JP-A-05191950 gezeigt mit einem Zentrifugallüfter im Gehäuse verwirbelt wird und die Kühlluft durch Öffnungen in Wandungen gepresst werden muss. Bei der erfindungsgemässen Lösung ist die Trennung der Kühl- und der Kompressorluft ohne zusätzliche Teile gewährleistet. Diese Trennung ist besonders wichtig bei Motoren, die in Staubsaugern oder Pumpen und dergleichen eingesetzt werden sollen, weil die empfindlichen elektrischen Teile des Motors nicht in Kontakt mit dem gepumpten Medium kommen dürfen. Zudem kann auf ein Motorgehäuse verzichtet werden, da der luftdichte Abschluss zwischen Kompressorgehäuse und Stator gewährleistet ist.

Vorteilhaft wirkt sich aus, dass die Kühlluft direkt ins Freie gelangt. So ist ein kleinerer Druck notwendig, um die Luft auszustossen, als wenn die Luft in einen weiteren Raum gelangt wie bei der JP-A-05191950, von wo sie nochmals durch Luftaustrittöffnungen gepresst werden muss. Dies wirkt sich positiv auf die Förderleistung des Lüfterrades aus.

Zweckmässigerweise besitzt der antriebsnahe Gehäuseteil zwischen Lüftergehäuse und Anschlussstutzen luft luftführende Mittel. Die Luftführungen erhöhen den Leitwert des Luftstromes, sodass die Kühlleistung verbessert wird. Vorteilhaft sind diese luftführenden Mittel geschlossene Kanäle. Dadurch kann die Sogwirkung noch verstärkt werden.

Weiter können im Lüftergehäuse verschiedene Lüfterräder eingesetzt werden. Beispielsweise können Zentifugallüfter mit offen Luftführungen zusammenwirkend eingesetzt werden, oder Saugturbinenräder mit geschlossenen Kanälen. Besonders geeignet sind Lüfterräder, die eine grosse Sogwirkung haben, weil der Widerstand der Kühlluft sich auf der Sogseite des Lüfterrades aufbaut. Zweckmässigerweise ist das Lüfterrad an der Welle z.B. durch Verkeilen festgestellt. Herstellungsmässig ist dies besonders einfach, und der Vorgang lässt sich auch automatisieren. Das Lüfterrad ist vorteilhaft aus Kunsstoff hergestellt.

Besonders vorteilhaft ist das Lagerschild aus verstärktem, duroplastischem Kunststoff gebildet. Ein solches Lagerschild lässt sich kostengünstig im Spritzgussverfahren herstellen und isoliert der Kompressor gegenüber den stromführenden Teilen des Elektromotors. Dies ermöglicht, das Bypass-Gebläse auch dann einzusetzen, wenn erwartet werden muss, dass die angesaugte Luft Wasser mitführt. Diese Isolation ist zudem für Flüssigkeitspumpen unabdingbar. Die Verstärkung kann z.B. aus Glasfaserschnitzeln bestehen. Als Kunststoff kann beispielsweise ein Polyamid, z.B. Polyamid 6 oder 66, oder Polycarbonat vorgesehen sein. Es lassen sich aber auch andere duroplastische Kunststoffe einsetzen. Vorteilhaft ist das Lagerschild, der Anschlussstutzen und das Lüftergehäuse mit den Luftführungen einstückig hergestellt.

Vorteilhaft wird das Lager der Welle in einer ringförmigen Lagerbüchse motorseitig am Lagerschild angeordnet. Der Ring ermöglicht im Gegensatz zu der im Stand der Technik üblichen Vertiefung im Lagerschild, dass die kompressorseitige Oberfläche des Lagerschildes keine Überstände aufweist und so unmittelbar als Leitfläche für die Kompressorluft dienen kann. Damit erübrigen sich auf der Kompressorseite zusätzliche Teile zur Führung der Kompressorluft und auf der Motorseite des Lagerschildes ist das Lager effizient gekühlt.

Vorteilhaft ist das Lagerschild, z.B. mit einer Schraube, durch den Stator hindurch mit einem Support für das gegenüberliegende Motorlager verbunden dadurch kann ein Motorgehäuse entfallen. Zweckmässigerweise wird die Verbindung mit wenigstens zwei Schrauben hergestellt. Vorteilhaft fixieren diese Schrauben oder Befestigungsmittel den Stator, indem sie durch Löcher im Stator geführt werden. Ein solches Zusammenbinden des Elektromotors zu einem Stück mit dem Kompressor hat Montagevorteile. Ein spezielles Motorgehäuse wird zudem hinfällig und der Motor wird, da er weniger eingepackt ist, besser gekühlt.

Nachfolgend werden Ausführungsbeispiele der Erfindung unter Bezugnahme auf die Figuren beschrieben. Es zeigt:
- Fig. 1: ein erfindungsgemässes Bypass-Gebläse mit Radialkompressor und Zentrifugallüfter und offenen Luftführungen für die Motorkühlung, in Seitenansicht und teilweise im Schnitt (Lagerschild),
- Fig. 2: ein weiteres Ausführungsbeispiel eines erfindungsgemässen Bypass-Gebläses mit Saugturbinen-Lüfterrad und geschlossenen Kanälen für die Motokühlung, linker Teil im Schnitt,
- Fig. 3: ein Ausführungsbeispiel wie Figur 2 mit vereinfachten Kanälen,
- Fig. 4: ein weiteres Ausführungsbeispiel, jedoch gegenüber den Figuren 2 und 3 um 90 Grad um die Motorachse gedreht, oben im Schnitt, unten in der Ansicht.

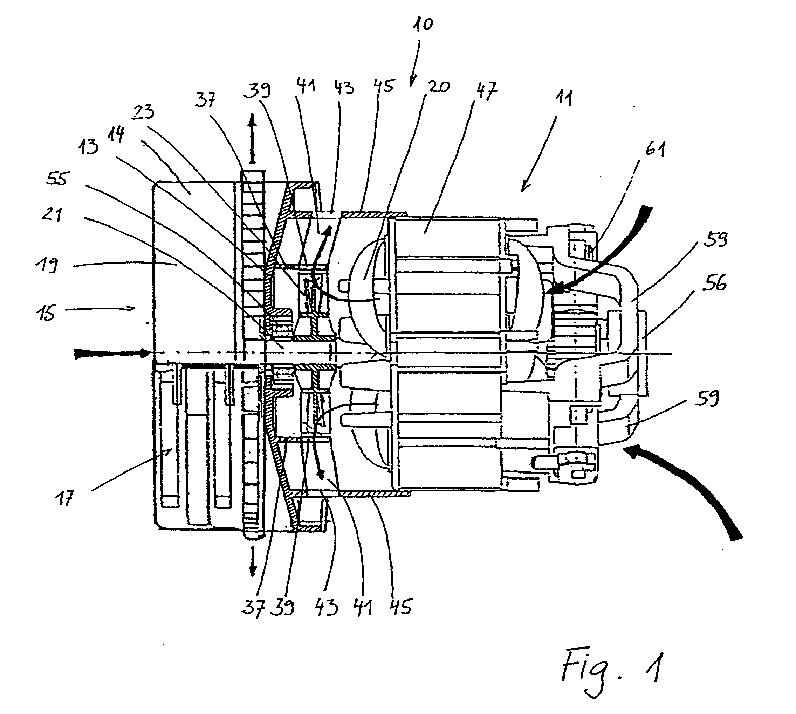

Figur 1 zeigt ein Ausführungsbeispiel eines erfindungsgemässen Bypass-Gebläses 10. Zur Erzeugung eines Druckgefälles für die Lüftung des Motors ist am Lagerschild oder Flansch 13 ein zylindrisches Lüftergehäuse 37 in Form eines Ringes oder Stutzens vorgesehen, in welchem das Lüfterrad 23 untergebracht ist. Das Lüftergehäuse 37 besitzt Ausnehmungen oder Öffnungen 39, welche über Luftführungen 41 mit den Luftaustrittsöffnungen 43 am Anschlussstutzen 45 in Verbindung stehen. Der Anschlusstutzen 45 besitzt eine dem Stator 47 entsprechende Form. Der Stator 47 taucht zum Teil etwas in den Stutzen 45 ein und liegt an diesem an, so dass sich eine praktisch luftdichte Verbindung zwischen Stator 47 und Anschlussstutzen 45 ergibt. Folglich steht die kompressornahe Motorseite zwischen dem Lagerschild 13 und dem Stator 47 lediglich über die Luftaustrittsöffnungen 43 mit der Umgebung in Verbindung.

Der antriebsnahe Gehäuseteil 13 wird auch Flansch oder Lagerschild 13 genannt. Er wird auch als "Base Pass System" bezeichnet. Der Anschlussstutzen 45 kann auch entsprechend mit Flanschmantel bezeichnet werden.

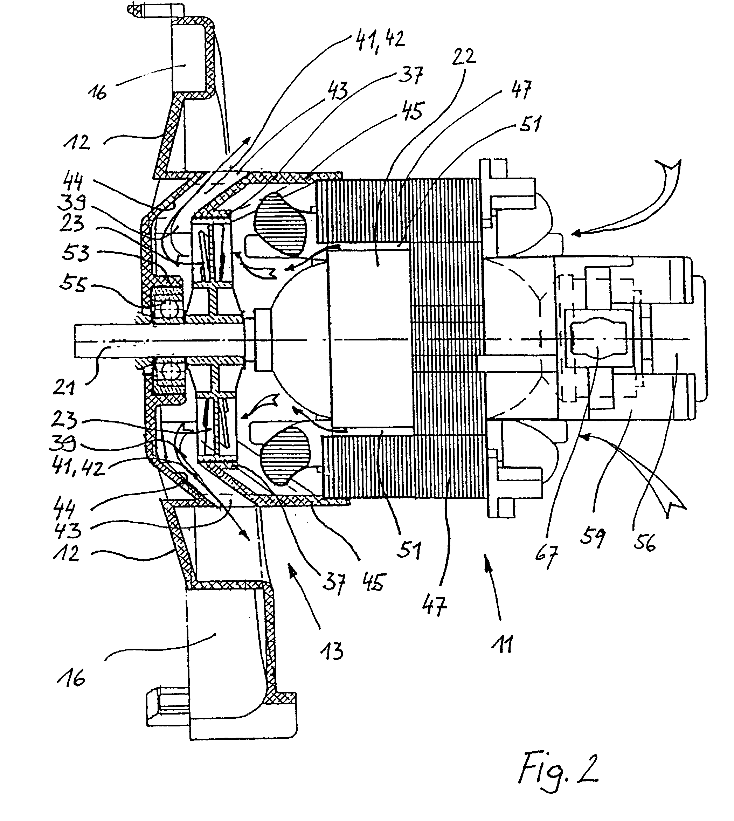

Aus den Figuren 2 bis 4 ist ersichtlich, dass der Motor zwischen Stator 47 und Rotor 22 Luftschlitze 51 aufweist. Durch das mit der Welle 21 drehfest verbundene Lüfterrad 23 wird im Betrieb des Elektromotors 11 Luft durch die Luftschlitze 51 angesaugt und durch die Luftaustrittsöffnungen 43 ausgestossen.

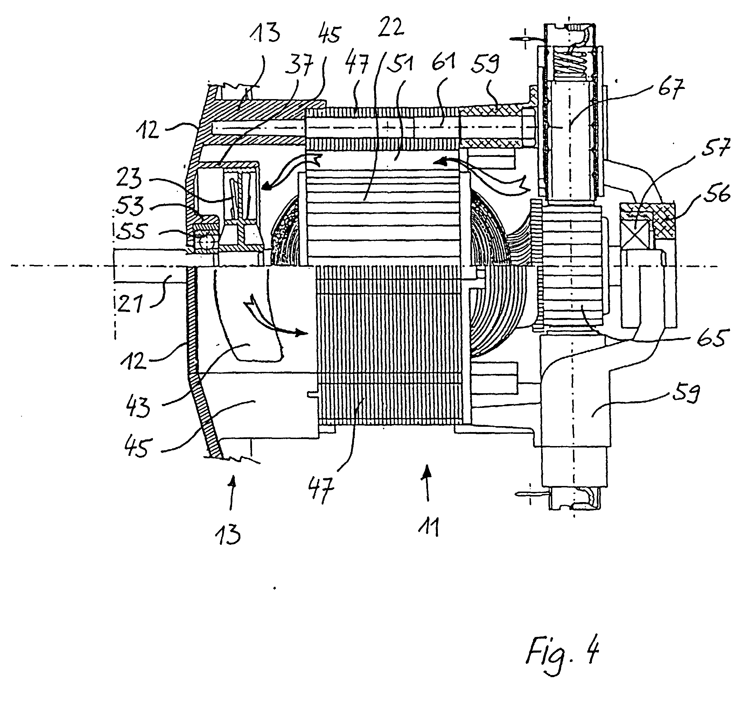

Das Lagerschild 13 besitzt motorseitig einen Ring 53 zur Aufnahme eines Lagers 55. Ein zweites Lager 57 befindet sich am kompressorfernen Ende der Welle 21 (Figur 4). Das Lager 57 respektive dessen Lagerbüchse 56 wird durch Brücken oder einen Support 59 gehalten. Der Support 59 ist mittels Schrauben 61 mit dem Lagerschild 13 verbunden.

Das Lagerschild 13 lässt sich kostengünstig im Spritzguss herstellen. Zu diesem Zweck wird ein z.B. Glasfaserschnitzel oder Glaskugeln enthaltendes Kunstharz in eine dem Lagerschild 13 entsprechende Spritzform eingespritzt.

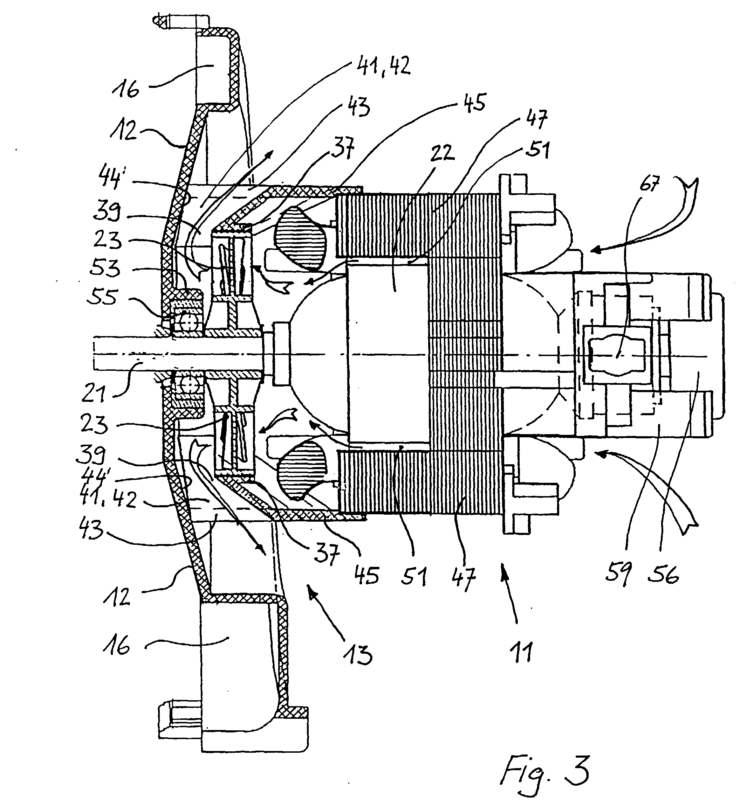

In den Figuren 2 und 3 sind die Kanäle 42 im Schnitt dargestellt. Zudem ist das Lagerschild 13 in seiner ganzen Ausdehnung im Schnitt sichtbar. Das Lagerschild 13 weist eine teilweise leicht zur Motorseite hin abgekröpfte Lauffläche 12 für das Schaufelrad 17 des Kompressors 15 (Fig. 1) und eine diese Fläche 12 umlaufende, im Querschnitt zunehmende Rinne 16 auf, in welcher die den Kompressor 15 verlassende Kompressorluft geführt ist.

Die Kanäle 42 für die Kühlluft sind in der Figur 2 mit nach aussen leicht zunehmendem Querschnitt ausgeführt und eine kompressorseitige Kanalwand 44 leitet die Kühlluft schräg nach rechts vom Kompressorgehäuse 19 weg. In Figur 3 hingegen ist der Kanal 42 offener und das Lagerschild 13 bildet im Bereich der Kanäle 42 die Kanalwand 44', wobei der Verlauf der Kanalwand 44' dem allgemeinen Verlauf der Führungsfläche 12 folgt.

Figur 4 zeigt ein Ausführungsbeispiel mit kürzerer Bautiefe des Motors 11. Gezeigt ist dabei auch die Verbindungsschraube 61, die Lagerschild 13 und Support 59 zusammenbindet. Es zeigt auch die Luftauslassöffnung 43 in der Ansicht sowie am anderen Ende des Motors 11 den Kommutator 65 und die Kohlen oder Bürsten 67.

## Patentansprüche

1. Elektromotorisch angetriebenes Bypass-Gebläse (10) mit
- einem Kompressorrad (17),
- einem aus zwei oder mehr Teilen (13,14) bestehenden Kompressorgehäuse (19),
- einem Elektromotor (11) mit Stator (47), Rotor (22), Welle (21) und einem Lüfterrad (23),
- wobei der antriebseitige Kompressorgehäuseteil (13) praktisch luftdicht an den Stator (47) angeschlossen ist und Luftaustrittöffnungen (43) aufweist,
**dadurch gekennzeichnet, dass**
- am antriebseitigen Kompressorgehäuseteil (13) ein Anschlussstutzen (45) zum praktisch luftdichten Anschluss an den Stator (47) und
- ein zweiter Stutzen als Gehäuse (37) für das Lüfterrad (23) ausgebildet ist, und dass
- luftführende Mittel (41) vom Lüftergehäuse (37) her durch die Wandung des Anschlussstutzens (45) hindurch ins Freie führen.

2. Bypass-Gebläse (10) nach Anspruch 1, **dadurch gekennzeichnet, dass** die luftführenden Mittel (41) Kanäle (42) sind.

3. Bypass-Gebläse (10) nach einem der Ansprüche 1 bis 2, dadurch gekennzeichnet, dass am Lagerschild (13) antriebseitig ein Ring (53) als Lagerbüchse angeordnet ist.

4. Bypass-Gebläse (10) nach einem der Ansprüche 1 bis 3, dadurch gekennzeichnet, dass der dem Elektromotor (11) zugewandte Teil (13) des Kompressorgehäuses (19) aus Kunststoff hergestellt ist und damit der Kompressor (15) vom Elektromotor (11) elektrisch isoliert ist.

5. Bypass-Gebläse (10) nach einem der Ansprüche 1 bis 4, dadurch gekennzeichnet, dass der dem Elektromotor (11) zugewandte Teil (13) des Kompressorgehäuses (19) einstückig hergestellt ist.

6. Bypass-Gebläse (10) nach einem der Ansprüche 1 bis 5, dadurch gekennzeichnet, dass das kompressorferne Lager (57) des Elektromotors (11) in einem Support (59) angeordnet ist, der mit dem antriebseitigen Kompressorgehäuseteil (13) mit Befestigungsmitteln (61) durch den Stator (47) hindurch verbunden ist, um so einen einzigen Körper zu bilden.

7. Bypass-Gebläse (10) nach einem der Ansprüche 1 bis 6, dadurch gekennzeichnet, dass das Lüfterrad (23) an der Welle (21) festgeklemmt ist.

8. Bypass-Gebläse (10) nach einem der Ansprüche 1 bis 7, dadurch gekennzeichnet, dass das Lüfterrad (23) aus Kunststoff gefertigt ist.

9. Bypass-Gebläse (10) nach einem der Ansprüche 1 bis 8, dadurch gekennzeichnet, dass das Lüfterrad ein Saugturbinen-Schaufelrad ist.

10. Bypass-Gebläse (10) nach einem der Ansprüche 1 bis 9, dadurch gekennzeichnet, dass die kompressorseitige Oberfläche 12 des antriebseitigen Gehäuseteils (13) eine Führungsfläche für die Kompressorluft ist.

11. Flüssigkeitspumpe mit einem Bypass-Gebläse gemäss einem der Ansprüche 1 bis 10.

## Claims

1. Electrically motor driven by-pass blower (10) with
- one compressor fan (17),
- one compressor-housing (19) consisting of two or more parts (13,14)
- one electric motor (11) with stator (47), rotor (22), driving shaft (21) and one impeller fan (23),
- where the compressor housing part on the drive side (13) is connected hermetically to the stator (47) and shows air outlets (43),
**characterised in that**
- the compressor housing part on the drive side (13) performs a piped connection (45) that joins practically hermetically the stator (47) and
- a second cylinder from the same motor base performs as a housing (37) of the impeller fan (23), and by
- air driving means (41) driving out exhaust air through the wall of the piped connection (45) from the impeller fan housing (37).

2. By-pass blower according to claim 1, characterised in that the air driving means (41) are air conducts (42).

3. Electrically motor driven by-pass blower according to any of claims 1 or 2, characterised in that on the drive side of the compressor base (13), a ring (53) is obtained and works as a bearing's seat.

4. Electrically motor driven by-pass blower according to any of claims 1 to 3, characterised in that the compressor housing part (13) facing the electric motor (11) is made out of plastic material, which electrically isolates the electric motor (11) from the compressor (15).

5. Electrically motor driven by-pass blower according to any of claims 1 to 4, characterised in that the compressor base (13) is characterised by the fact that the compressor base (13) of the compressor housing (19) of the electric motor (11) is made in one single piece.

6. Electrically motor driven by-pass blower according to any of claims 1 to 5, characterised in that the rear bearing (57) of the electric motor (11), lies in a bracket (59), which is jointed through the stator to the compressor base (13) with fastenings (61), so that they form one single body.

7. Electrically motor driven by-pass blower according to any of claims 1 to 6, characterised in that the impeller fan (23) is tightly connected to the driving shaft (21)

8. Electrically motor driven by-pass blower according to any of claims 1 to 7, characterised in that the impeller fan (23) is made out of plastic material.

9. Electrically motor driven by-pass blower according to any of claims 1 to 8, characterised in that impeller fan is an exhaust suction impeller fan.

10. Electrically motor driven by-pass blower according to any of claims 1 to 9, characterised in that the compressor's side surface (12) of the compressor base (13) is a sliding surface for the compressed air.

11. Liquid pumps with an electrically motor driven by-pass blower in conformity to one of the claims 1 to 10.

## Revendications

1. Souffleur by-pass motorisé électrique (10) avec
- une turbine (17),
- une emboîture turbines (19) composée de deux ou plus parties (13,14)
- un moteur électrique (11) avec un stator (47), un rotor (22), un arbre moteur (21) et une hélice (23),
- où la partie de l'emboîture turbines côté moteur (13) est connectée pratiquement hermétiquement sur le stator (47) et présente des sorties d'air (43),
**caractérisé par le fait que**
- la partie moteur de l'emboîture turbines (13) se prolonge en forme de tuyau (45) en se connectant pratiquement hermétiquement au stator (47) et
- par une deuxième structure en forme de tuyau se développant à partir de la même embase pour former une emboîture (37) de l'hélice (23), et
- par des structures de véhiculation de l'air (41) qui véhiculent l'air de refroidissement à partir de l'emboîture de l'hélice (37) au travers de la paroi de connexion de l'embase moteur au stator (45).

2. Souffleur by-pass motorisé électrique (10) selon revendication 1, caractérisé par le fait que les structures de véhiculation de l'air (41) sont des conduits d'air (42).

3. Souffleur by-pass motorisé électrique (10) selon revendication 1 ou 2, caractérisé par le fait que du côté partie électrique, l'embase moteur (13) a un siège cylindrique (53) qui sert de siège pour roulements.

4. Souffleur by-pass motorisé électrique (10) selon une des revendication 1 à 3, caractérisé par le fait que la partie emboîture turbines (13) côté moteur électrique (11) est faite en matière plastique qui isole le moteur électrique (11) de la partie turbines (15).

5. Souffleur by-pass motorisé électrique (10) selon une des revendications 1 à 4 caractérisé par le fait que toutes les parties de l'embase moteur (13) de l'emboîture turbine (19) du moteur électrique (11) sont faites en une seule pièce.

6. Souffleur by-pass motorisé électrique (10) selon une des revendications 1 à 5 caractérisé par le fait que le roulement postérieur (57) du moteur électrique (11) est fixé dans un pont (59) qui est connecté au travers du stator à la partie moteur de l'emboîture turbines (13) par des connections (61) en obtenant ainsi un seul corps.

7. Souffleur by-pass motorisé électrique (10) selon une des revendications 1 à 6 caractérisé par le fait que l'hélice (23) est connectée de manière fixe sur l'arbre moteur (21).

8. Souffleur by-pass motorisé électrique (10) selon une des revendications 1 à 7 caractérisé par le fait que l'hélice (23) est faite en matière plastique.

9. Souffleur by-pass motorisé électrique (10) selon une des revendications 1 à 8 caractérisé par le fait que l'hélice est une hélice d'aspiration de l'air de refroidissement.

10. Souffleur by-pass motorisé électrique (10) selon une des revendications 1 à 9 caractérisé par le fait que la surface côté turbines (12) de l'embase moteur (13) est une surface de véhiculation de l'air.

11. Pompes pour liquides avec un Souffleur by-pass motorisé électrique en conformité à une des revendications de 1 à 10.
